# FASCICULE DE BREVET EUROPEEN

(11) **EP 2 831 473 B1**
(45) Date de publication et mention de la délivrance du brevet: **30.03.2016**
(21) Numéro de dépôt: 13710488.1
(22) Date de dépôt: 19.02.2013
(51) Int. Cl.: F16K 1/22, F16K 1/52

(54) **VANNE DE CIRCULATION D'UN FLUIDE**
DURCHFLUSSVENTIL
FLUID FLOW VALVE

(30) Priorité: 28.03.2012 FR 1252792
(43) Date de publication de la demande: 04.02.2015
(73) Titulaire: Valeo Systèmes de Contrôle Moteur, 95800 Cergy (FR)
(72) Inventeur: HODEBOURG, Grégory, 78500 Sartrouville (FR); LEROUX, Samuel, 78300 Poissy (FR)
(74) Mandataire: Garcia, Christine
(86) Numéro de dépôt international: PCT/FR2013/050344
(87) Numéro de publication internationale: WO 2013/144465

(56) Documents cités:
- US-A- 3 770 242
- US-A- 6 003 490
- US-A- 6 138 988

## Description

L'invention se rapporte à une vanne de circulation d'un fluide. Ce type de vanne peut, par exemple, équiper un circuit d'alimentation en gaz d'un moteur thermique de véhicule, pour réguler le débit des gaz EGR (Exhaust Gas Recirculation) dans une boucle permettant de ponctionner une partie des gaz d'échappement en sortie de moteur, pour les réinjecter en amont dudit moteur. Le principe de fonctionnement de ce type de vanne repose sur la rotation commandée d'un volet, pouvant passer d'une position d'ouverture complète pour laisser passer le fluide, à une position de fermeture pour bloquer ce passage. L'invention a pour objet une vanne de circulation de fluide améliorée.

Une vanne de circulation de fluide possède donc un volet, qui est monté pivotant sur un axe de rotation, de sorte que ledit axe sépare le volet en une première partie et en une deuxième partie. Il est à préciser que la frontière entre la première et la deuxième partie du volet n'est pas forcément matérialisée par une limite physique. Lorsque ce volet se retrouve dans une position de fermeture, la première partie et la deuxième partie dudit volet viennent typiquement chacune au contact d'un joint de la vanne, ledit joint agissant alors comme une butée de positionnement dudit volet.

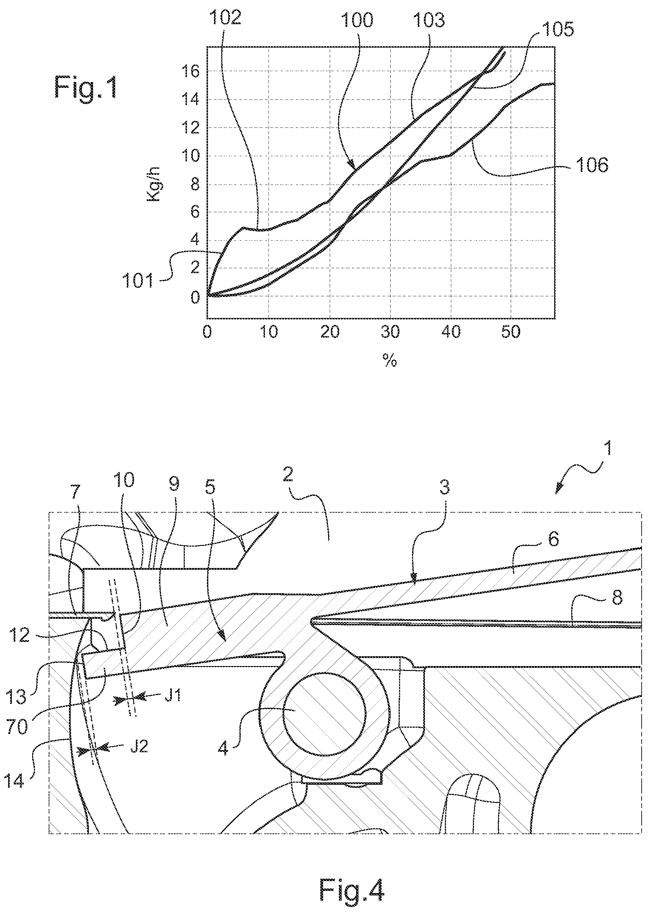

En se référant à la figure 1, qui est un diagramme donnant le débit massique du gaz (exprimé en kilogrammes par heure) en fonction de l'angle d'ouverture du volet de la vanne (exprimé en pourcentage d'ouverture), un problème souvent rencontré avec ce type de vanne est que pour des petits angles d'ouverture du volet, le débit de gaz monte d'abord trop vite, puis stagne quelques instants, avant de croître à nouveau régulièrement lorsque le volet poursuit son ouverture angulaire. En effet, la courbe 100, donnant le débit massique du gaz traversant la vanne en fonction de l'angle d'ouverture du volet, montre d'abord une première zone 101 très pentue correspondant à une montée brutale du débit sur une plage angulaire comprise entre environ 0° et 5°, suivie d'une deuxième zone 102 assimilable à un plateau et correspondant à une plage angulaire comprise entre environ 5° et 10°, ladite courbe 100 se terminant par une troisième zone 103 approximativement linéaire, témoignant d'une progression sensiblement proportionnelle dudit débit en fonction de l'ouverture du volet sur une plage angulaire supérieure à environ 10°. Les deux autres courbes 105,106 inscrites dans le diagramme montrent une variation linéaire du débit massique des gaz traversant d'autres types de vannes, en fonction de l'angle d'ouverture du volet desdites vannes, et ce, sur toute la plage d'ouverture angulaire possible dudit volet. Ces deux courbes matérialisent la variation du débit gazeux qu'il serait souhaitable d'observer avec une vanne selon l'invention.

Une vanne de circulation de fluide selon l'invention possède un volet de régulation pivotant ayant subi une modification structurelle, afin de limiter le débit gazeux pour les petits angles d'ouverture dudit volet. De cette manière, le débit gazeux traversant ladite vanne sera linéaire sur toute la plage d'ouverture angulaire possible, éliminant ainsi la montée brutale de ce débit observée pour les tout petits angles d'ouverture, ainsi que la phase de stagnation de ce débit suivant cette montée brutale. Une vanne selon l'invention assure ainsi une augmentation progressive du débit gazeux, de façon lissée et sans à-coup, et offre donc un meilleur contrôle du débit gazeux que les vannes équipées d'un volet traditionnel.

Une vanne de circulation d'un fluide, telle que décrite dans l'un des documents US 6138988, US 6003490 ou US 3770242, présente un corps délimitant un conduit interne et comprenant un volet monté pivotant sur un axe séparant ledit volet en une première partie et une deuxième partie, ledit volet étant apte à pivoter entre une position d'ouverture permettant le passage du fluide, notamment des gaz dans le conduit, et une position de fermeture empêchant ledit passage, et pour laquelle au moins une des première et deuxième partie vient en butée contre un élément d'appui. La première partie du volet est dotée d'un renflement, afin de réduire la section de passage des gaz entre ladite première partie et l'élément d'appui, pour des angles d'ouverture dudit volet inférieurs à une valeur seuil. L'objectif d'un tel renflement est de réduire la section de passage des gaz dès que le volet pivote pour s'ouvrir, afin d'adoucir la montée du débit de gaz sur les premiers instants d'ouverture dudit volet, et donc d'éliminer la phase de stagnation entrevue lors d'une montée brutale dudit débit. De cette manière, durant toute la phase d'ouverture de la vanne correspondant à un pivotement progressif du volet depuis sa position de fermeture, la montée du débit de gaz dans ladite vanne est régulière, sans changement de pente.

La vanne peut être une vanne de régulation du débit des gaz EGR dans une boucle permettant de ponctionner une partie des gaz d'échappement en sortie d'un moteur thermique de véhicule.

La vanne peut être une vanne disposée dans le circuit d'admission du moteur thermique, dans le circuit d'échappement du moteur thermique, ou dans une boucle de recirculation des gaz d'échappement permettant à ces derniers d'être réinjectés à l'admission du moteur thermique. Cette boucle de recirculation peut être « basse pression » ou « haute pression ».

La vanne est notamment une vanne dite « deux voies ».

En variante, la vanne peut être une vanne dite « trois voies ». La vanne peut alors être disposée à l'entrée de la boucle de recirculation, c'est-à-dire à l'endroit du circuit d'échappement où prend naissance la boucle de recirculation. La vanne dite « trois voies » peut en variante être disposée à la sortie de la boucle de recirculation, c'est-à-dire à l'endroit du circuit d'admission où les gaz d'échappement sont réinjectés à l'admission.

Selon la revendication 1 de l'invention, l'élément d'appui est constitué d'un joint de la vanne, le joint assurant l'étanchéité de la vanne au niveau du pourtour des première et deuxième parties du volet lorsque le volet est en position de fermeture. Le renflement est alors configuré sur la première partie du volet en tenant compte de la position du joint dans la structure interne de la vanne.

Lorsque ce volet se retrouve dans une position de fermeture, la première partie et la deuxième partie dudit volet peuvent venir chacune au contact du joint de la vanne, ledit joint agissant alors comme une butée de positionnement dudit volet.

Lorsque ce volet se retrouve dans une position de fermeture, la première partie du volet peut venir au contact du joint de la vanne par une première surface et la deuxième partie du volet peut venir au contact du joint de la vanne par une deuxième surface, la première et la deuxième surface étant des surfaces opposées du volet.

La première et la deuxième surface du volet peuvent venir au contact du joint tout en étant dans un même plan.

La première partie du volet peut comporter une pièce support surmontée par un renflement qui relie la deuxième partie du volet à la pièce support.

La largeur de la pièce support mesurée selon l'axe de rotation du volet peut être plus grande que celle du renflement mesuré selon l'axe de rotation du volet.

Le contour du renflement peut être délimité par une paroi arrière s'étendant parallèlement à l'axe de rotation du volet, et par deux parois latérales parallèles, s'étendant suivant une direction perpendiculaire audit axe de rotation, lesdites trois parois étant perpendiculaires au plan de surface de la pièce support.

Le renflement peut revêtir toute forme, et a pour principal objectif d'accroitre les dimensions de la première partie du volet dans au moins une direction.

Le renflement peut constituer en une pièce ajoutée venant se solidariser à la première partie du volet, ou bien être fabriqué en même temps que ladite première partie, pour ne former avec elle qu'une seule et même pièce.

De façon générale, les petits angles d'ouverture du volet correspondent aux premiers degrés d'ouverture dudit volet.

Avantageusement, la valeur seuil est inférieure à 10°. Généralement, le comportement du volet est critique vis-à-vis du débit gazeux, pour des angles d'ouverture inférieurs à 10°. C'est sur cette plage angulaire de 0 à 10° que peut être observée une rapide montée du débit gazeux, suivie d'une phase de stagnation dudit débit.

De façon préférentielle, le renflement s'étend sur toute la largeur de la première partie du volet, la largeur de ladite première partie étant parallèle à l'axe de rotation du volet. Pour cette configuration, le renflement occupe une position étalée sur la première partie du volet, et peut ainsi pleinement jouer son rôle de régulateur de débit en coopération avec le joint de la structure interne de la vanne.

De façon avantageuse, la première partie du volet est une pièce de faible épaisseur, le renflement contribuant à augmenter l'épaisseur de ladite première partie.

Préférentiellement, le renflement est configuré pour assurer une section de passage constante des gaz, sur une plage d'ouverture inférieure à 10°. De cette manière, la géométrie du renflement est conçue en tenant compte de la position et de la forme du joint, pour ménager un passage de section constante avec ledit joint, dans l'optique d'assurer un débit gazeux constant sur une plage d'ouverture angulaire inférieure à 10°.

Avantageusement, la section de passage constante est réalisée au moyen d'une paroi plane du renflement. Autrement dit, cette paroi plane peut se déplacer lors de la mise en rotation du volet, en demeurant parallèle à son plan de surface, et en restant à une distance constante dudit joint. Grâce à cette paroi, le débit de gaz sur une plage de faible ouverture angulaire du volet va pouvoir demeurer constant.

De façon préférentielle, la première partie du volet est sensiblement plane, la paroi plane du renflement permettant d'assurer un passage constant des gaz étant sensiblement perpendiculaire au plan de ladite première partie. Il s'agit d'une caractéristique structurelle du renflement permettant d'assurer une section de passage des gaz, réduite et constante, sur une plage de faible ouverture angulaire du volet.

De façon avantageuse, les deux parties du volet sont en continuité l'une de l'autre, et sont reliées entre elles de façon rigide. Autrement dit, les deux parties du volet pivotent simultanément pour ouvrir ou fermer la vanne.

Préférentiellement, le bord arrière de la première partie du volet, et qui constitue le bord le plus éloigné de l'axe de rotation, ménage avec une zone de la structure interne de la vanne un deuxième passage pour les gaz. De cette manière, le débit de gaz à travers la vanne est doublement régulé : d'une part, grâce au renflement qui va limiter le passage des gaz pour les petites ouvertures angulaires du volet, et d'autre part, grâce au positionnement relatif de la première partie du volet par rapport à la structure interne de la vanne, qui va assurer un deuxième passage pour les gaz qui seront déjà passés entre le renflement et le joint.

Avantageusement, la zone de la structure interne de la vanne est en fonderie, le débit des gaz pour les petits angles d'ouverture du volet étant régulé une première fois par le renflement qui réduit la section de passage des gaz avec le joint, et une deuxième fois par le bord arrière de la première partie du volet, qui ménage un deuxième passage de section constante avec ladite fonderie durant toute la course d'ouverture du volet.

L'élément d'appui peut faire saillie dans le conduit interne de la vanne.

Les vannes selon l'invention présentent l'avantage d'offrir un bon contrôle du débit gazeux sur toute la plage d'ouverture du volet, en proposant notamment une montée linéaire et régulière du débit gazeux sur une plage d'ouverture angulaire réduite du volet. Les vannes selon l'invention ont l'avantage d'être plus performantes que les vannes de régulation déjà existantes, grâce à ce contrôle amélioré du débit gazeux, tout en demeurant d'un encombrement constant et faciles à fabriquer. Elles présentent l'avantage d'être peu coûteuses, dans la mesure où la modification du volet s'effectue au moyen d'un ajout de matériau communément utilisé et peu onéreux.

On donne ci-après, une description détaillée d'un mode de réalisation préféré d'une vanne selon l'invention, en se référant aux dessins annexés sur lesquels :
- La figure 1, déjà décrite, est un diagramme donnant le débit massique du gaz traversant une vanne de régulation de l'état de la technique en fonction de l'angle d'ouverture de son volet,
- La figure 2 est une vue en perspective d'un volet d'une vanne selon l'état de la technique,
- La figure 3 est une vue en perspective d'un volet d'une vanne selon l'invention,
- La figure 4 est une vue schématisée de la structure interne d'une vanne de circulation de fluide selon l'invention, le volet étant dans une position de faible ouverture,

Un circuit de gaz d'un moteur thermique de véhicule automobile comprend une partie amont d'alimentation en gaz dudit moteur, dans laquelle circule notamment de l'air frais, et une partie aval d'échappement dans laquelle circulent des gaz brûlés pour être évacués hors du véhicule. Généralement, un tel circuit de gaz comprend au moins une boucle EGR (de l'anglais *Exhaust Gas Recirculation*) joignant la partie aval d'échappement à la partie amont d'alimentation, pour permettre de mélanger des gaz d'échappement à l'air frais incident. Puisque ces boucles EGR ne doivent pas être ouvertes en permanence lors de toutes les phases de fonctionnement du moteur, elles sont équipées chacune d'une vanne EGR permettant de réguler le flux des gaz d'échappement circulant dans la boucle considérée.

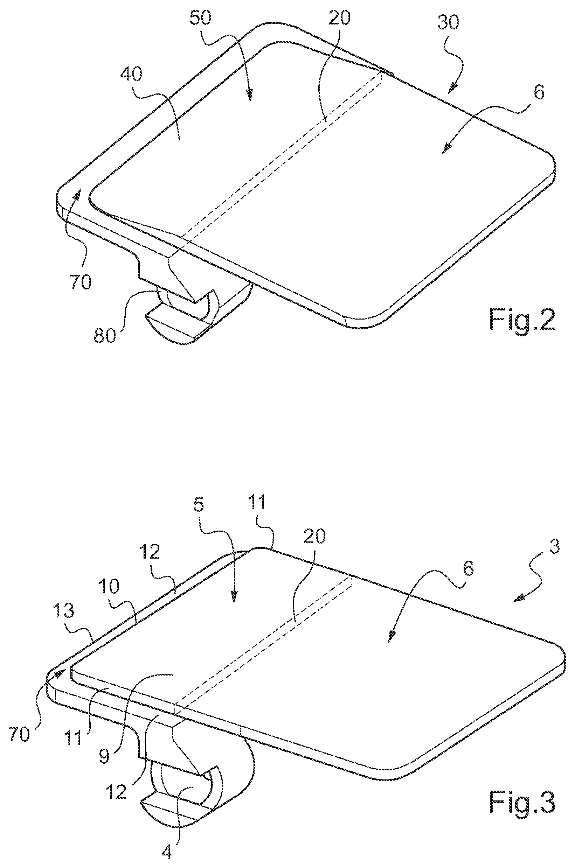

En se référant à la figure 4, une vanne EGR 1 selon l'invention, comprend un conduit 2 de circulation de gaz et un volet 3, monté pivotant sur un axe 4 de rotation, et apte à se déplacer entre une position de fermeture pour laquelle il empêche le passage des gaz d'échappement, et une position d'ouverture pour laquelle il autorise ce passage. Le volet 3 est monté sur l'axe 4, de sorte que ledit axe 4 sépare ledit volet 3 en une première partie 5 et une deuxième partie 6. Lesdites parties 5,6 sont planes et de faible épaisseur, et sont situées en continuité l'une de l'autre. Préférentiellement, elles constituent une seule et même pièce. Ces deux parties 5,6 peuvent avoir une largeur identique, ladite largeur constituant alors leur dimension prise selon l'axe de rotation 4, tandis que la première partie 5 possède une longueur inférieure à celle de la deuxième partie 6, la longueur représentant leur dimension prise suivant un axe perpendiculaire audit axe 4 de rotation. La première 5 et la deuxième 6 parties sont reliées entre elles rigidement, si bien qu'elles pivotent simultanément autour de l'axe 4 en étant situées à 180° l'une de l'autre. Lorsque le volet 3 est en position de fermeture, la première partie 5 vient en appui contre une première partie d'un joint 7, et la deuxième partie 6 peut venir en appui contre une deuxième partie de joint 8. En variante, un jeu de quelques dixièmes de millimètre peut être prévu entre la deuxième partie 6 et la deuxième partie de joint 8, de manière à préserver l'isostatisme du système. Le joint 7,8 est monté dans la vanne 1. Les deux parties de joint 7,8 peuvent être situés en continuité l'un de l'autre, dans le même plan, et lorsque le volet 3 est en position de complète fermeture, la première partie 5 vient en appui contre une face de la première partie de joint 7, tandis que la deuxième partie 6 vient en appui contre la face opposée de la deuxième partie de joint 8 (ou avec un jeu selon la variante mentionnée). L'agencement du volet 3 dans la vanne 1 est tel que la première partie 5 du volet gère l'entrée des gaz, et la deuxième partie 6 dudit volet 3 gère la sortie desdits gaz.

En se référant à la figure 2, un volet 30 d'une vanne de l'état de la technique comprend une deuxième partie 6 de forme rectangulaire et ayant une épaisseur constante. La première partie 50 de ce volet 30 comporte une pièce support 70 de forme sensiblement rectangulaire et d'épaisseur constante, surmontée par une pièce de liaison 40 de forme sensiblement rectangulaire, et possédant une épaisseur profilée, ladite pièce de liaison 40 reliant la deuxième partie 6 du volet 30 à la pièce support 70. En effet, cette pièce de liaison 40 située au contact de la pièce support 70, prolonge idéalement la deuxième partie 6 du volet 30, en ayant la même épaisseur au niveau de leur plan de jonction 20, l'épaisseur de cette pièce de liaison 40 décroissant progressivement en s'éloignant dudit plan de jonction 20, suivant une direction perpendiculaire à ce plan 20. Il est à préciser que le plan de jonction 20 est parallèle à l'axe de rotation 80 du volet 30. Les dimensions de la pièce support 70 sont supérieures à celles de la pièce de liaison 40 à son contact, si bien que l'épaisseur de la partie périphérique en forme de U de la première partie 50 du volet 30, correspond à l'épaisseur de cette pièce support 70. Préférentiellement, la deuxième partie 6 du volet 30 et la pièce de liaison 40 constituent une seule et même pièce. Ce type de volet 30 conduit au profil 101 du diagramme de la figure 1 correspondant à une montée brutale 102 du débit gazeux pour les angles d'ouvertures inférieurs à 5°, suivie d'une phase de stagnation 103 de ce débit pour des angles d'ouvertures compris entre 5° et 10°.

En se référant à la figure 3, un volet 3 d'une vanne 1 selon l'invention se différencie du volet 30 d'une vanne de l'état de la technique décrit ci-avant, au niveau de leur première partie 5,50. En effet, la pièce de liaison est un renflement 9 qui prolonge la deuxième partie 6 du volet 3, et qui est au contact de la pièce support 70 de la première partie 5, ne possède plus une épaisseur profilée, mais une épaisseur constante. La nouvelle épaisseur constante de ce renflement 9 correspond à l'épaisseur de la deuxième partie 6 du volet. De cette manière, le renflement 9 d'épaisseur constante et la deuxième partie 6 du volet 3 peuvent constituer une seule et même pièce de forme parallélépipédique rectangle. Autrement dit, de façon plus globale, la première partie 5 d'un volet 3 d'une vanne 1 de régulation selon l'invention a été rehaussée par rapport à la première partie 50 d'un volet 30 d'une vanne de l'état de la technique. Toutes les autres caractéristiques structurelles du volet 3,30 demeurent inchangées. Il est important de souligner que le contour du renflement 9 est délimité par une paroi arrière 10 s'étendant parallèlement à l'axe de rotation 4, et par deux parois latérales 11 parallèles, s'étendant suivant une direction perpendiculaire audit axe 4, lesdites trois parois 10,11 étant perpendiculaires au plan de surface 12 de la pièce support 70.

Lorsque le volet 3 d'une vanne de régulation 1 selon l'invention est en position de fermeture complète, la deuxième partie 6 dudit volet 3 est au contact de la deuxième partie de joint 8, et la surface 12 de la pièce support 70 de la première partie 5 dudit volet 3 est au contact de la première partie de joint 7. En se référant à la figure 4, montrant le volet 3 dans une position de faible ouverture, correspondant à un angle de rotation inférieur à 10°, le renflement 9 de la première partie 5 du volet 3 ménage une section de passage J1 pour les gaz, qui est réduite et constante, sur une course du volet 3 correspondant à une rotation de 0° à environ 10°. Cette section de passage constante J1 est rendue possible, grâce à la paroi arrière 10 de ce renflement 9, qui se déplace, durant cette rotation de faible amplitude, dans un plan qui est parallèle à son plan de surface, maintenant ainsi un écart constant avec la première partie de joint 7. Au-delà d'une rotation de 10°, la section de ce passage croît progressivement, pour assurer un débit de gaz linéaire sur le reste de la course du volet 3 pour atteindre une position d'ouverture totale. Le bord arrière 13 de la pièce support 70 de la première partie 5 du volet 3, qui est un bord parallèle à l'axe de rotation 4 du volet 3, et qui constitue le bord 13 de ladite pièce 70 le plus éloigné dudit axe 4, ménage un deuxième passage J2 pour les gaz, avec une paroi en fonderie 14 de la structure interne d'une vanne 1 selon l'invention, ce deuxième passage J2 conservant une section sensiblement constante, durant toute la course d'ouverture du volet. De cette manière, lorsque le volet 3 d'une vanne 1 selon l'invention s'ouvre depuis sa position de complète fermeture, le débit massique des gaz à travers ladite vanne 1 est régulé une première fois grâce au premier passage J1 étroit ménagé entre le renflement 9 de la première partie 5 du volet 3 et la première partie de joint 7, puis une deuxième fois grâce au deuxième passage J2 ménagé entre la pièce support 70 de ladite première partie 5 du volet 3 et une paroi en fonderie 14 de la structure interne de la vanne 1. Un volet 3 d'une vanne de régulation 1 selon l'invention permet d'assurer un débit massique des gaz, qui est linéaire sur toute la course d'ouverture dudit volet 3, entre sa position de fermeture et sa position d'ouverture.

Des variantes de réalisation pourront être prévues, sans pour autant sortir du cadre de l'invention. Notamment, les joints ou parties de joints 7, 8 mentionnés ici sont un exemple d'élément d'appui avec lequel peut coopérer le renflement 9. Une autre pièce, telle qu'une fonderie ou un support rapporté, peut remplir la même fonction.

## Revendications

1. Vanne (1) pour réguler le débit des gaz EGR dans une boucle permettant de ponctionner une partie des gaz d'échappement en sortie d'un moteur thermique de véhicule, présentant un corps délimitant un conduit interne (2) et comprenant un volet (3,30) monté pivotant sur un axe (4,80) séparant ledit volet (3,30) en une première partie (5,50) et une deuxième partie (6), ledit volet (3,30) étant apte à pivoter entre une position d'ouverture permettant le passage des gaz dans le conduit (2), et une position de fermeture empêchant ledit passage, et pour laquelle au moins une des première (5,50) et deuxième (6) partie vient en butée contre un élément d'appui (7,8), la première partie (5) du volet étant dotée d'un renflement (9), afin de réduire la section de passage des gaz entre ladite première partie (5) et l'élément d'appui (7), pour des angles d'ouverture dudit volet (3) inférieurs à une valeur seuil, **caractérisée en ce que** l'élément d'appui est un joint (7,8) de la vanne, le joint assurant l'étanchéité de la vanne au niveau du pourtour des première (5,50) et deuxième (6) parties du volet lorsque le volet est en position de fermeture.

2. Vanne (1) selon la revendication 1, la valeur seuil étant inférieure à 10°.

3. Vanne selon l'une quelconque des revendications précédentes, la première partie du volet (5) venant au contact du joint (7,8) de la vanne par une première surface et la deuxième partie (6) du volet venant au contact du joint (7,8) de la vanne par une deuxième surface, lorsque le volet (3) se retrouve dans une position de fermeture, la première et la deuxième surface étant des surfaces opposées du volet.

4. Vanne (1) selon l'une quelconque des revendications 1 à 3, le renflement (9) s'étendant sur toute la largeur de la première partie (5) du volet (3), la largeur de ladite première partie (5) étant parallèle à l'axe de rotation (4) du volet (3).

5. Vanne (1) selon la revendication 4, la première partie du volet comportant une pièce support (70) surmontée par le renflement (9) qui relie la deuxième partie (6) du volet à la pièce support (70).

6. Vanne (1) selon la revendication 5, la largeur de la pièce support mesurée selon l'axe de rotation du volet (3) étant plus grande que celle du renflement (9) mesuré selon l'axe de rotation du volet (3).

7. Vanne (1) selon l'une quelconque des revendications précédentes, le renflement (9) étant configuré pour assurer une section de passage (J1) constante des gaz, sur une plage d'ouverture inférieure à 10°.

8. Vanne (1) selon la revendication 7, la section de passage constante (J1) étant réalisée au moyen d'une paroi plane (10) du renflement (9).

9. Vanne (1) selon la revendication 8, la première partie (5) du volet (3) étant sensiblement plane, et la paroi plane (10) du renflement (9) permettant d'assurer un passage constant (J1) des gaz est sensiblement perpendiculaire au plan (12) de ladite première partie (5).

10. Vanne (1) selon l'une quelconque des revendications 1 à 9, les deux parties (5,6) du volet (3) étant en continuité l'une de l'autre, et reliées entre elles de façon rigide.

11. Vanne (1) selon l'une quelconque des revendications 1 à 10, le bord arrière (13) de la première partie (5) du volet (3), qui constitue le bord le plus éloigné de l'axe de rotation (4), ménageant avec une paroi (14) de la structure interne de la vanne (1), un deuxième passage (J2) pour les gaz.

12. Vanne (1) selon la revendication 11, la paroi (14) de la structure interne de la vanne (1) étant en fonderie, et le débit des gaz pour les petits angles d'ouverture du volet (3) étant régulé une première fois par le renflement (9) qui réduit la section de passage (J1) des gaz avec la première partie de joint (7,8), et une deuxième fois par le bord arrière (13) de la première partie (5) du volet (3) qui ménage un deuxième passage (J2) de section constante avec ladite fonderie (14), durant toute la course d'ouverture du volet (3).

13. Vanne (1) selon l'une quelconque des revendications précédentes, l'élément d'appui faisant saillie dans le conduit interne (2) de la vanne (1).

## Patentansprüche

1. Ventil (1) zum Regulieren des EGR-Gasdurchflusses in einer Schleife, das es erlaubt, einen Teil der Abgase am Ausgang einer Fahrzeugbrennkraftmaschine zu entnehmen, das einen Körper aufweist, der eine innere Leitung (2) abgrenzt und eine Klappe (3, 30) umfasst, die schwenkend auf einer Achse (4, 80), die die Klappe (3, 30) in einen ersten Teil (5, 50) und einen zweiten Teil (6) trennt, montiert ist, wobei die Klappe (3, 30) geeignet ist, zwischen einer Öffnungsposition, die den Durchgang der Gase in der Leitung (2) erlaubt, und einer Schließposition, die den Durchgang verhindert, zu schwenken, und für die der erste (5, 50) und/oder der zweite (6) Teil zum Anschlagen gegen ein Auflageelement (7, 8) kommt, wobei der erste Teil (5) der Klappe mit einem Buckel (9) versehen ist, um den Durchgangsquerschnitt der Gase zwischen dem ersten Teil (5) und dem Auflageelement (7) für Öffnungswinkel der Klappe (3), die kleiner sind als ein Schwellenwert, zu verringern, **dadurch gekennzeichnet, dass** das Auflageelement eine Dichtung (7, 8) des Ventils ist, wobei die Dichtung die Abdichtung des Ventils im Bereich des Umfangs des ersten (5, 50) und zweiten (6) Teils der Klappe sicherstellt, wenn die Klappe in Schließposition ist.

2. Ventil (1) nach Anspruch 1, wobei der Schwellenwert kleiner ist als 10°.

3. Ventil nach einem der vorhergehenden Ansprüche, wobei der erste Teil der Klappe (5) mit der Dichtung (7, 8) des Ventils durch eine erste Oberfläche in Berührung kommt, und der zweite Teil (6) der Klappe mit der Dichtung (7, 8) des Ventils durch eine zweite Oberfläche in Berührung kommt, wenn sich die Klappe (3) in einer Schließposition befindet, wobei die erste und die zweite Oberfläche gegenüberliegende Oberflächen der Klappe sind.

4. Ventil (1) nach einem der Ansprüche 1 bis 3, wobei sich der Buckel (9) auf der gesamten Länge des ersten Teils (5) der Klappe (3) erstreckt, wobei die Breite des ersten Teils (5) zu der Rotationsachse (4) der Klappe (3) parallel ist.

5. Ventil (1) nach Anspruch 4, wobei der erste Teil der Klappe ein Tragteil (70) umfasst, über dem der Buckel (9), der den zweiten Teil (6) der Klappe mit dem Tragteil (70) verbindet, liegt.

6. Ventil (1) nach Anspruch 5, wobei die Breite des Tragteils entlang der Rotationsachse der Klappe (3) gemessen größer ist als die des Buckels (9) entlang der Rotationsachse der Klappe (3) gemessen.

7. Ventil (1) nach einem der vorhergehenden Ansprüche, wobei der Buckel (9) konfiguriert ist, um einen konstanten Durchgangsquerschnitt (J1) der Gase auf einem Öffnungsbereich kleiner als 10° sicherzustellen.

8. Ventil (1) nach Anspruch 7, wobei der konstante Durchgangsquerschnitt (J1) mittels einer flachen Wand (10) des Buckels (9) hergestellt ist.

9. Ventil (1) nach Anspruch 8, wobei der erste Teil (5) der Klappe (3) im Wesentlichen flach ist und die flache Wand (10) des Buckels (9), die es erlaubt, einen konstanten Durchgang (J1) der Gase sicherzustellen, im Wesentlichen zu der Ebene (12) des ersten Teils (5) senkrecht ist.

10. Ventil (1) nach einem der Ansprüche 1 bis 9, wobei die zwei Teile (5, 6) der Klappe (3) zueinander in Fortsetzung und miteinander starr verbunden sind.

11. Ventil (1) nach einem der Ansprüche 1 bis 10, wobei der hintere Rand (13) des ersten Teils (5) der Klappe (3), der den von der Rotationsachse (4) am weitesten entfernten Rand bildet, mit einer Wand (14) der inneren Struktur des Ventils (1) einen zweiten Durchgang (J2) für die Gase einrichtet.

12. Ventil (1) nach Anspruch 11, wobei die Wand (14) der inneren Struktur des Ventils (1) aus Gussmaterial ist und der Durchfluss der Gase für die kleinen Öffnungswinkel der Klappe (3) ein erstes Mal durch den Buckel (9) reguliert wird, der den Durchgangsquerschmitt (J1) der Gase mit dem ersten Teil der Dichtung (7, 8) verringert, und ein zweites Mal durch den hinteren Rand (13) des ersten Teils (5) der Klappe (3), der einen zweiten Durchgang (J2) mit konstantem Querschnitt mit dem Gussmaterial (14) während des gesamten Öffnungshubs der Klappe (3) einrichtet.

13. Ventil (1) nach einem der vorhergehenden Ansprüche, wobei das Auflageelement in die innere Leitung (2) des Ventils (1) vorsteht.

## Claims

1. Valve (1) for regulating the flow of the EGR gases in a loop enabling bleeding of some of the exhaust gases leaving a vehicle internal combustion engine, having a body delimiting an internal duct (2) and including a flap (3, 30) mounted to pivot on an axle (4, 80) separating said flap (3, 30) into a first portion (5, 50) and a second portion (6), said flap (3, 30) being able to pivot between an open position allowing the passage of the gases in the duct (2) and a closed position preventing said passage, and for which the first portion (5, 50) and the second portion (6) come(s) to abut against a bearing element (7, 8), the first portion (5) of the flap including a thickened region (9) in order to reduce the gas flow section between said first portion (5) and the bearing element (7) for angles of opening of said flap (3) less than a threshold value, **characterized in that** the bearing element is a seal (7, 8) of the valve, the seal sealing the valve at the perimeter of the first portion (5, 50) and the second portion (6) of the flap when the valve is in the closed position.

2. Valve (1) according to Claim 1, the threshold value being less than 10°.

3. Valve according to any one of the preceding claims, a first surface of the first portion (5) of the flap coming into contact with the seal (7, 8) of the valve and a second surface of the second portion (6) of the valve coming into contact with the seal (7, 8) of the valve when the flap (3) is in a closed position, the first and second surfaces being opposite surfaces of the flap.

4. Valve (1) according to any one of Claims 1 to 3, the thickened region (9) extending over the entire width of the first portion (5) of the flap (3), the width of said first portion (5) being parallel to the axle (4) of the flap (3).

5. Valve (1) according to Claim 4, the first portion of the valve including a support part (70) surmounted by the thickened region (9) that connects the second portion (6) of the flap to the support part (70).

6. Valve (1) according to Claim 5, the width of the support part measured along the rotation axis of the flap (3) being greater than that of the thickened region (9) measured along the rotation axis of the flap (3).

7. Valve (1) according to any one of the preceding claims, the thickened region (9) being configured to produce a constant gas flow section (J1) over a range of angles of opening less than 10°.

8. Valve (1) according to Claim 7, the constant flow section (J1) being produced by means of a plane wall (10) of the thickened region (9).

9. Valve (1) according to Claim 8, the first portion (5) of the flap (3) being substantially plane and the plane wall (10) of the thickened region (9) enabling a constant gas flow section (J1) to be produced is substantially perpendicular to the plane (12) of said first portion (5).

10. Valve (1) according to any one of Claims 1 to 9, the two portions (5, 6) of the flap (3) being continuous with each other and rigidly connected to each other.

11. Valve (1) according to any one of Claims 1 to 10, the rear edge (13) of the first portion (5) of the flap (3) that constitutes the edge at the greatest distance from the axle (4) producing in conjunction with a wall (14) of the internal structure of the valve (1) a second passage (J2) for the gases.

12. Valve (1) according to Claim 11, the wall (14) of the internal structure of the valve (1) being a cast wall and the gas flow rate for small angles of opening of the flap (3) being regulated firstly by the thickened region (9) that in conjunction with the first seal portion (7, 8) reduces the gas flow section (J1) and then by the rear edge (13) of the first portion (5) of the flap (3) that in conjunction with said cast wall (14) produces a constant second flow section (J2) throughout the opening travel of the flap (3).

13. Valve (1) according to any one of the preceding claims, the bearing element projecting into the internal duct (2) of the valve (1).
